# EUROPEAN PATENT SPECIFICATION

(11) **EP 1 746 777 B1**
(45) Date of publication and mention of the grant of the patent: **22.06.2011**
(21) Application number: 06023254.3
(22) Date of filing: 10.09.2004
(51) Int. Cl.: H04L 12/16, H04L 29/08

(54) **UPnP-based media contents reproducing system and method thereof**
System und Verfahren zur Wiedergabe UPnP-basierter Medieninhalten
Système de reproduction de données de média basées sur UPnP et procédé correspondant

(30) Priority: 23.09.2003 KR 20030065949
(43) Date of publication of application: 24.01.2007
(62) Divisional of application: 04774573.2
(73) Proprietor: LG Electronics Inc., Seoul 150-010 (KR)
(72) Inventor: Kim, Chang-Hyun, Anseong, Gyeonggi-Do (KR); Min, Ku-Bong, Seoul (KR)
(74) Representative: Katérle, Axel

(56) References cited:
- EP-A- 1 286 501
- EP-A- 1 300 989
- WO-A-00/58967
- WO-A-02/01833
- WO-A-02/09384
- US-A- 6 064 380
- US-A1- 2002 029 256
- US-A1- 2002 078 161
- US-A1- 2003 097 485
- RITCHIE J ET AL: "UPnP AV Architecture: 0.83" DESIGN DOCUMENT MICROSOFT, XX, XX, 12 June 2002 (2002-06-12), pages 1-22, XP002271673

## Description

The present invention relates to a Universal Plug and Play (UPnP)-based home network system, and more particularly to, a UPnP-based media contents playback system and a method thereof.

With popularization of a ultrahigh speed intemet and digitalization of electric products, there have been attempts to connect a personal computer (PC), a network gateway device, an audio/video device, home appliances and a control device through one home network.

A network environment based on the PC in houses has been gradually changed into an environment using various sub network technologies due to the diffusion of home networking. The UPnP technology has been suggested due to necessity of independently uniformly networking the electric products by using an IP protocol.

The UPnP, which is defined by a protocol of the standard network architecture, is one of the major standard technologies of the home network which a plurality of companies in each country create through the UPnP forum. A UPnP-based home network system includes a plurality> of UPnP devices for providing services, and a control point for controlling the plurality of UPnP devices.

The control point means a controller having functions of sensing and controlling various devices. That is, the control point is a controller for controlling various devices (for example, UPnP devices). By the key input of the user, the control point discovers various UPnP devices, obtains description information of the discovered UPnP devices, and controls the UPnP devices.

Exemplary UPnP devices include devices connected to the home network, such as a PC, a network equipment, a peripheral device such as a printer, an audio/video device and home appliances. The UPnP devices notify their events to the control point.

The home network system for controlling the UPnP-based audio/video devices includes a media server for providing media contents through the home network, a media renderer for playing the media contents provided through the home network, and a control point for controlling the media server and the media renderer.

The control point obtains state information of the media server and the media renderer through events. For example, when the media server and the media renderer provide AV Transport service and Rendering Control service, if the media server and the media renderer put changed state variables into 'Last Chang' state variable table, the changed state variables are transmitted to the control point after a predetermined time. Thus, the control point is informed of the current states of the devices.

The media server notifies information on the media contents to the control point in every UPnP action. Also, the media server transmits the corresponding media contents to the media renderer by streaming to play the media contents.

The media renderer plays the media contents. The streaming method can be selected from various known methods. The current UPnP AV standard uses 'Out-of-Band transfer protocol' for streaming.

On the other hand, when the UPnP AV devices communicate with each other according to a Unicast method in a UPnP AV device triangle model, the user can move to another space and watch the media contents which he/she watched by one renderer. For example, the user stops the media server, moves to another space, selects the media contents of the media server, and plays the selected media contents, thereby watching the media contents.

However, when the user watches the media contents, if the user moves to another space, the user misses part of the media contents or watches the media contents by using a personal video recorder (PVR). That is, a conventional UPnP-based media contents playback system and a method thereof have disadvantages in that, when the user watching the media contents in one space intends to watch the media contents in another space, the user must pause playback of the media contents, move to another space, discover the UPnP AV device, and obtain information for playing the media contents from the media server and the media renderer.

In addition, the conventional UPnP-based media contents playback system and the method thereof require an additional time for recomposing the UPnP devices according to the information for playing the media contents from the media server and the media renderer. Accordingly, the conventional UPnP-based media contents playback system and the method thereof have disadvantages in that, when the user watching the media contents in one space intends to watch the media contents in another space, the user cannot rapidly continuously watch the media contents in another space.

"UPnP AV Architecture: 0.83", Ritchie J. et.al., may be construed to disclose a basic principle of a playback architecture including a media server (MS), a control point (CP) and a media renderer (MR). The media server contains entertainment content the user wants to render, and the CP initiates UPnP actions such that a content flows from the MS to the MR. The actions also comprise an audio/video (AV) architecture.

US 2002/0078161 A1 may be construed to disclose an architecture similar to the above "UPnP AV Architecture: 0.83", further invoking, via an event process, an action to notify selected users of an event.

EP 1 300 989 A1 may be construed to disclose invoking an action for assigning a state variable upon change of the variable.

EP 1 286 501 A1 relating to UPnP may be construed to disclose a translation between Home AV interoperability (HAVi) parameters and UPnP AV Transport Application Programming Interface (API) parameters.

US 2002/0029256 A1 may be construed to disclose invoking a gathering action for state information.

US 2003/097485 A1 may be construed to disclose general state information.

WO 02/09384 A may be construed to disclose state information for initializing/terminating a session. To this end, Generic Eventing Notification (GENA) is used for subscribing/unsubscribing a UPnP device at a Data Driven Interaction (DDI) controller.

WO 02/01833 A may be construed to disclose general state information of the above-defined GENA type.

Therefore, an object of the present invention is to provide a UPnP-based media contents playback system which can rapidly continuously play media contents played by a first control point in a different space by a second control point, by transmitting state information of the media contents played by the first control point to the second control point, and a method thereof.

To achieve these and other advantages and in accordance with the purpose of the present invention, as embodied and broadly described herein, there is provided a method according to claim 1 and a system according to claim 6. Developments are set forth in the respective dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a structure diagram illustrating a UPnP-based media contents playback system in accordance with the present invention;
Fig. 2 is an exemplary diagram illustrating an operational process of the UPnP-based media contents playback system, in a state where a model of the UPnP-based media contents playback system is a pull model in accordance with the present invention;
Fig. 3 is an exemplary diagram illustrating an operational process of the UPnP-based media contents playback system, in a state where a model of the UPnP-based media contents playback system is a push model in accordance with the present invention; and
Figs. 4 to 11 are tables showing additional actions in accordance with the present invention.

### MODES FOR CARRYING OUT THE PREFERRED EMBODIMENTS

Reference will now be made in detail to the preferred embodiments of the present invention, examples of which are illustrated in the accompanying drawings.

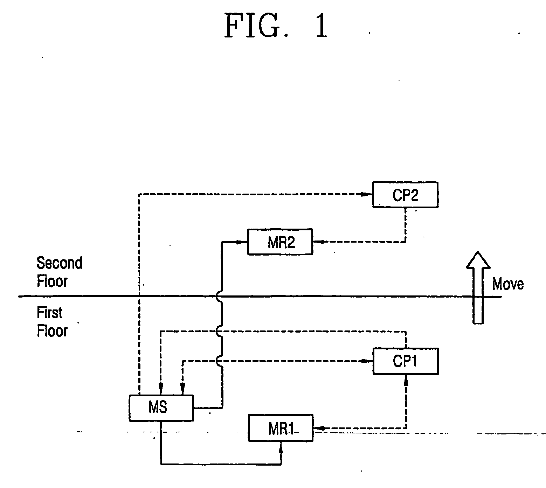

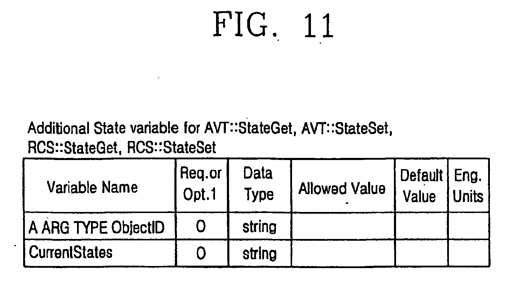

A UPnP-based media contents playback (reproducing) system which can rapidly continuously play media contents (for example, audio and video contents) played by a first control point by a second control point by transmitting state information of the media contents played by the first control point to the second control point, and a method thereof in accordance with the preferred embodiments of the present invention will now be described in detail with reference to Figs. 1 to 11. That is, when the user watching the media contents in one space intends to move to another space and watch the media contents, the first control point stores the state information of the media contents (state information of a media renderer) in a media server, and the second control point located in another space reads the state information stored in the media server and plays the corresponding media contents, so that the user can rapidly continuously watch the media contents in another space without taking an additional time for recomposing UPnP devices in another space.

Fig. 1 is a structure diagram illustrating a UPnP-based media contents playback system in accordance with the present invention.

A first control point CP1 selects predetermined media contents among the media contents provided by a media server MS, and confirms whether a first media renderer MR1 can play the selected media contents. Here, the first control point CP1 matches protocols and data formats between the media server MS and the first media renderer MR1, sets an AudioNideo Transport Uniformed Resource Identifier (AV Transport URI) through the media server MS or the first media renderer MR1, and invokes a play action. That is, when the media contents stream is transmitted from the media server MS to the first media renderer MR1, the first control point CP1 plays the corresponding media contents by the first media renderer MR1, so that the user can watch the media contents.

On the other hand, when the user pauses playback of the media contents to move to another space (for example, from first to second floor), the first control point CP1 pauses the media server MS and the first media renderer MR1, and stores state information of the first media renderer MR1 (rendering state information) in the media server MS. That is, the first control point CP1 receives state information of an AV Transport service and a Rendering Control service of the first media renderer MR1 from the first media renderer MR1, and stores the received state information in the media server MS. Here, the AV Transport service and the Rendering Control service are defined by the UPnP.

Thereafter, when the user moves to another space (for example, from first to second floor), a second control point CP2 located in another space receives the state information stored in the media server MS through the UPnP-based home network upon the user's request. That is, the media server MS transmits the stored state information to the second control point CP2 according to the control signal from the first control point CP1.

The second control point CP2 transmits the state information to a second media renderer MR2. That is, the second control point CP2 transmits the state information of the AV Transport service and the Rendering Control service of the first media renderer MR1 to the second media renderer MR2, so that the user can rapidly continuously watch the media contents which he/she previously watched in another space (for example, second floor).

On the other hand, in order for the first control point CP1 to transmit the state information to the second control point CP2 through the media server MS, the first control point CP1 and the second control point CP2 must be able to discover and control each other. However, it is difficult for the first control point CP1 and the second control point CP2 to discover and control each other. Accordingly, in order to transmit the state information received by the first control point CP1 to the second control point CP2, the state information is preferably transmitted through the service of the UPnP device. For example, preferably, the first control point CP1 transmits the state information stored in the media server MS to the second control point CP2 through a Connection Manager service of the media server MS.

Preferably, an optional action for transmitting the state information stored in the media server MS to the second control point CP2 through the Connection Manager service of the media server MS is added and temporarily stored in the media server MS. For example, the name of the optional action can be CM::StatePut( ), and input arguments can be objectID, MediaServer State information and MediaRenderer State information. The objectID is necessary as an identifier for the stored state information.

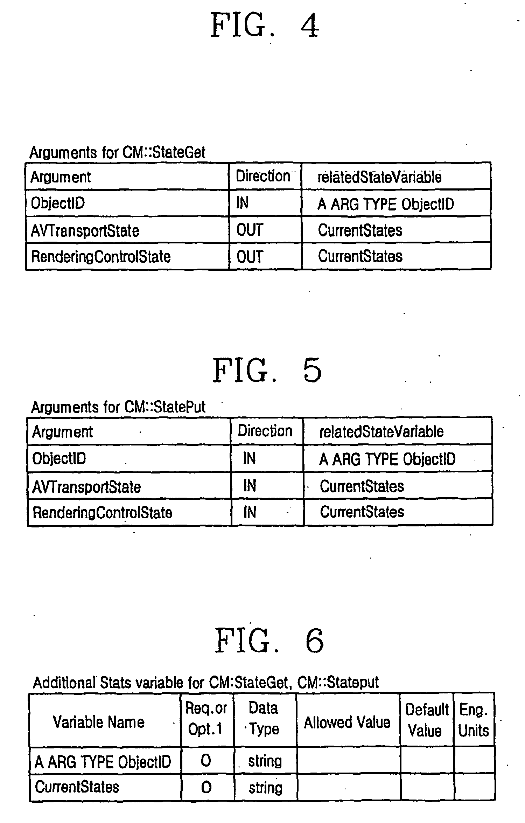

Therefore, when the user intends to search the media server MS by using the second control point CP2 located in another space and watch the media contents which he/she previously watched, the user can watch the media contents from the paused part or the beginning on the basis of the state information corresponding to the objectID, namely, the state information of the media contents. For example, when the user intends to watch the media contents on the basis of the stored state information, the second control point CP2 receives the state information stored in the media server MS through CM:StateGet action (refer to Fig. 4). Here, the received state information includes state information relating to the AV Transport Control service of the first media renderer MR1 and state information relating to the Rendering control service thereof.

In accordance with the present invention, the media contents playback method of the UPnP-based media contents playback system can be varied according to a pull model and a push model. The process of the user watching the media contents before moving from one to another space is identical to that in the general UPnP standard, and thus explanations thereof are omitted. The operation for transmitting the state information stored in the media server MS to the second control point CP2 will now be explained.

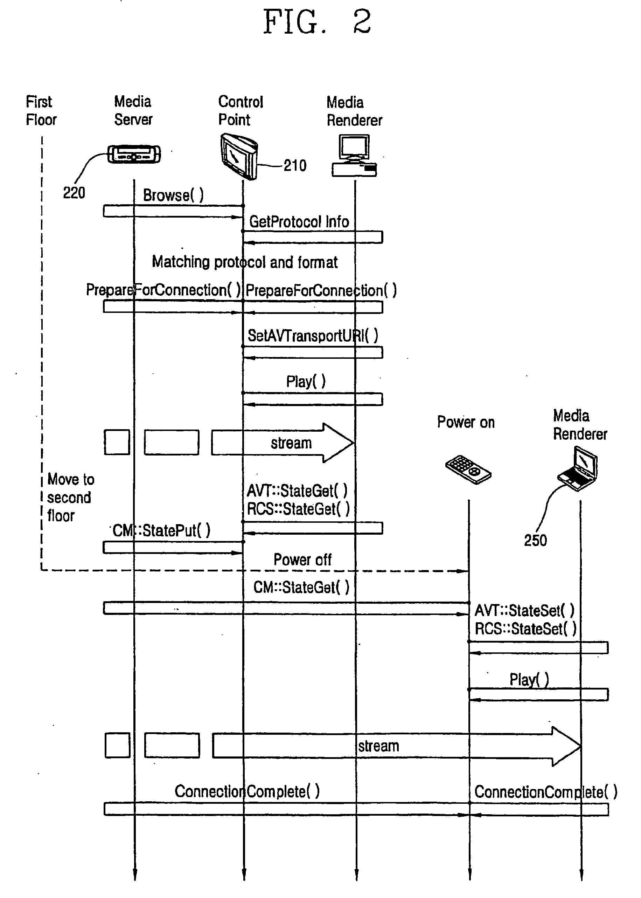

First, when the model of the UPnP-based media contents playback system is the pull model, the UPnP-based media contents playback system obtains the state information and plays the corresponding media contents on the basis of the state information as shown in Fig. 2. That is, in the pull model, the media renderer 250 executes the AV Transport control service and the Rendering control service. Therefore, each action is Invoked once in every service, and thus AVT::StateSet( ) action and RCS::StateSet( ) action are invoked to set up the media server 220. Here, an argument for AVT::StateSet( ) action is an AV Transport State, and an argument for RCS::StateSet( ) action is a Rendering Control State.

Conversely, when the media renderer 250 does not support AVT::StateSet( ) action and RCS::StateSet( ) action, the control point 210 can use actions of the existing service to change states of each service to wanted states of the user. For example, when a volume value of the Rendering Control service is not a basic value, the control point 210 invokes the corresponding action and adjusts the volume value.

When the model of the UPnP-based media contents playback system is the pull model and the second control point CP2 transmits the state information stored in the media server MS to the second media renderer MR2, the second media renderer MR2 can change a media offset of the buffered media contents on the basis of time information of the media server MS, or play the media contents again from the last pause time through seek( ) action.

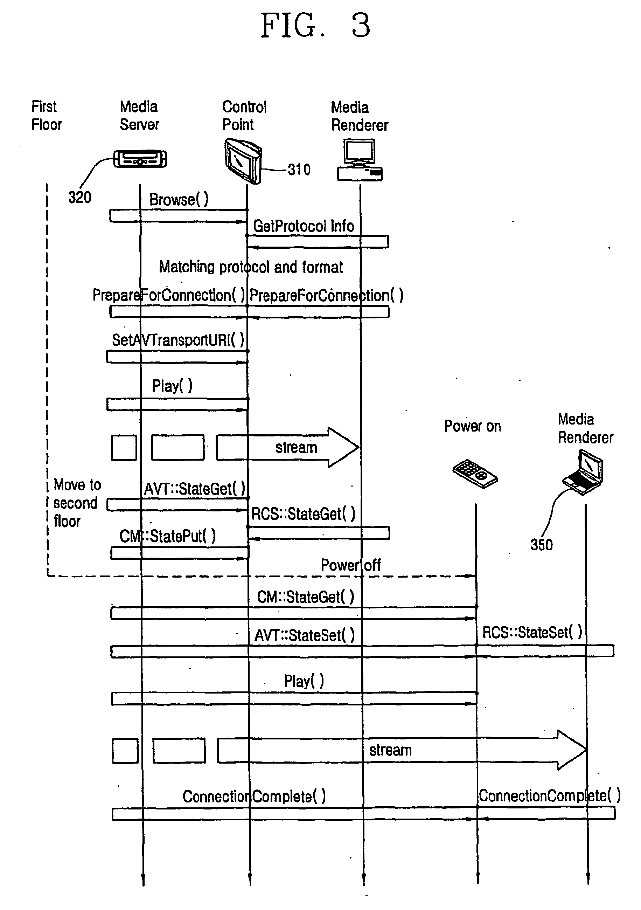

On the other hand, when the model of the UPnP-based media contents playback system is the push model, the media server 220 executes the AV Transport service, and the media renderer MR executes the Rendering Control service. Therefore, the UPnP-based media contents playback system obtains the state information and plays the corresponding media contents on the basis of the state information as shown in Fig. 3.

As illustrated in Fig. 3, the control point 310 invokes AVT::StateSet( ) action from the media server 320 and RCS::StateSet( ) action from the media renderer 350. When AVT::StateSet( ) action and RCS::StateSet( ) action do not exist, the control point 310 can invoke necessary actions a few times among the actions of the existing service so as to change states of each service to wanted states of the user.

When the model of the UPnP-based media contents playback system is the push model and the second control point CP2 transmits the state information stored in the media server MS to the second media renderer MR2, the second media renderer MR2 can change a media offset on the basis of time information of the media server MS, or play the media contents from the last pause time through seek( ) action.

The operational process of the UPnP-based media contents playback system will now be explained with reference to actions of Figs. 4 to 11. The actions of Figs. 4 to 11 can be modified in various forms by various methods, and thus will now be schematically explained.

Figs. 4 to 11 are tables showing additional actions in accordance with the present invention.

In order to transmit the state information received by the first control point CP to the second control point CP2, CM:StateGet( ) action and CM::StatePut( ) action can be added as shown in Figs. 4 to 6.

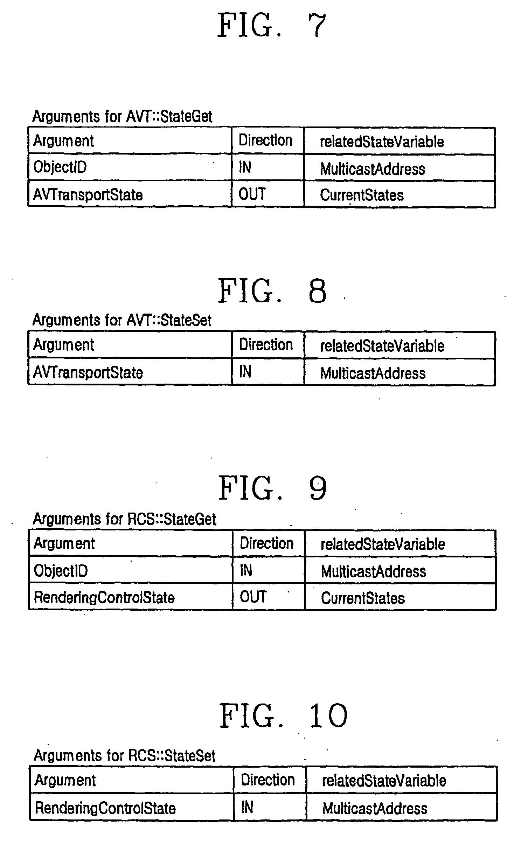

So as to transmit the media contents stream from the media server MS to the second media renderer MR2 by invoking each action once in every service, AVT::StateGet( ), AVT::StateSet( ), RCS::StateGet( ) and AVT::StateSet( ) actions can be added as shown in Figs. 7 to 11.

On the other hand, in a state where the first control point CP1 does not pause the operation of the first media renderer MR1, the users can watch the media contents by the second media renderer MR2, which is called a coping renderer. For example, when the two users watch the same media contents (for example, movie program) together, if one of the users intends to move to another space and watch the same media contents in another space, the first control point CP1 invokes StateSet action from the media server MS, and the second media renderer MR2 located in another space receives the state information through StateGet action, so that the user can continuously watch the media contents by the second media renderer MR2 on the basis of the state information. For reference, the control point located in another space (for example, second control point) can be informed of all state information of the first media renderer MR1 by joining the event service, and thus may not use CM:StateSet( ) and CM::StateGet( ) services.

In addition, the second media renderer MR2 located in another space is a combo media renderer (integration module of control point and media renderer), which can receive the state information by joining the event services of the media server MS and the first media renderer MR1, instead of invoking CM:StateGet( ) action. Here, when a type of the media contents is a file, the user can easily watch the file-type media contents on the basis of the location information of the media contents which he/she previously watched.

In accordance with the present invention, when the media server MS transmits the media contents to the second media renderer MR2 located in another space through a multicast, the second media renderer MR2 can play the media contents transmitted through the multicast

As discussed earlier, in accordance with the present invention, the UPnP-based media contents playback system and the method thereof provide the state information of the first media renderer to the second control point of the second space under the control of the first control point of the first space. Therefore, when the user watching the media contents in one space by the media renderer moves to another space, he/she can rapidly continuously watch the media contents by the media renderer located in another space. That is, when the user watching the media contents in one space intends to watch the media contents in another space, the process of searching the UPnP devices in another space and obtaining the information for playing the corresponding media contents from the media server and the media renderer, and the additional time for recomposing the UPnP devices are not needed.

Furthermore, the UPnP-based media contents playback system and the method thereof provide the state information of the first media renderer to the second control point of the second space under the control of the first control point of the first space. As a result, the users can watch the same media contents in the first and second spaces, respectively.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A method for delivering content playback related information between a reproducing device (MR1, MR2) and a server (MS), the reproducing device and the server being included in a media contents playback system configured in a pull mode, the method comprising:
streaming a content from the server to the reproducing device; and
reproducing the streamed content at the reproducing device;
wherein the method is **characterized in that** the method comprises:
receiving a request for bookmarking the content being reproduced at the reproducing device;
obtaining state information including a transport state information and a rendering state information related to a playback of the content at a time of the request for bookmarking, wherein the transport state information is associated with a streaming status of the content, and rendering state information is associated with a rendering status of the content,
wherein according to the pull mode, both the transport state information and the rendering state information are obtained from the reproducing device; and
invoking an action to the server to store the transport state information and the rendering state information in the server, wherein the transport state information and the rendering state information are included in the action as an input argument.

2. The method of claim 1, wherein the reproducing device executes, according to the pull mode, both a first service for managing the transport state information and for streaming the content and a second service for managing the rendering state information and for rendering the content.

3. The method of claim 2, wherein the first service is an audio/video (AV) transport service, and the second service is a rendering control service.

4. The method of claim 1, wherein the stored transport state information and the rendering state information are used as control information for late playback of the content from a position corresponding to a time at which the request for bookmarking is requested.

5. The method of claim 1, wherein the rendering state information includes a volume value, and the transport information includes bookmark position information of the bookmarked content.

6. A system for delivering content playback related information, the system being configured in a pull mode, comprising:
a server (MS) configured to store content and stream the content;
a device (MR1, MR2) configured to receive the streamed content and render the content; and
a control point (CP1, CP2) for controlling the server and the device, wherein the system is **characterized in that** the control point is further configured to:
receive a request for bookmarking the streamed content,
obtain state information including a transport state information and a rendering state information related to a playback of the content at a time of the request for bookmarking, wherein the transport state information is associated with a streaming status of the content, and the rendering state information is associated with a rendering status of the content, and wherein according to the pull mode, both the transport state information and the rendering state information are obtained from the device; and
invoke an action to the server to store the transport state information and the rendering state information in the server, wherein the transport state information and the rendering state information are included in the action as an input argument.

7. The system of claim 6, wherein the server is configured to store the transport state information and the rendering state information according the action.

8. The system of claim 6, wherein the device is configured to execute, according to the pull mode, both a first service for managing the transport state information and for streaming the content and a second service for managing the rendering state information and for rendering the content.

9. The system of claim 8, wherein the first service is an audio/video (AV) transport service, and the second service is a rendering control service.

10. The system of claim 9, wherein the stored transport state information and the rendering state information are used as control information for late playback of the content from a position corresponding to a time at which the request for bookmarking is requested.

11. The system of claim 9, wherein the rendering state information includes a volume value, and the transport information includes bookmark position information of the bookmarked content.

## Patentansprüche

1. Verfahren zum Liefern von auf die Wiedergabe von Inhalten bezogener Information zwischen einem Wiedergabegerät (MR1, MR2) und einem Server (MS), wobei das Wiedergabegerät und der Server in einem Playback-System von Medieninhalten enthalten ist, das in einem Pull-Mode konfiguriert ist, wobei das Verfahren umfasst:
Streamen eines Inhalts von dem Server zu dem Wiedergabegerät; und
Wiedergeben des gestreamten Inhalts auf dem Wiedergabegerät;
wobei das Verfahren **dadurch gekennzeichnet ist, dass** das Verfahren umfasst:
Empfangen einer Aufforderung zum Bookmarken des auf dem Wiedergabegerät wiedergegebenen Inhalts;
Erhalten von Zustandsinformation, die eine Transportzustandsinformation und eine Wiedergabezustandsinformation bezüglich eines Playbacks des Inhalts zu einem Zeitpunkt der Aufforderung zum Bookmarken enthält, wobei die Transportzustandsinformation mit einem Streaming-Status des Inhalts verbunden ist, und die Wiedergabezustandsinformation mit einem Wiedergabestatus des Inhalts verbunden ist,
wobei gemäß dem Pull-Mode sowohl die Transportzustandsinformation als auch die Wiedergabezustandsinformation von dem Wiedergabegerät erhalten werden; und
Veranlassen einer Aktion an den Server, um die Transportzustandsinformation und die Wiedergabezustandsinformation im Server zu speichern, wobei die Transportzustands-information und die Wiedergabezustandsinformation in der Aktion als Eingabe-Argument enthalten sind.

2. Verfahren nach Anspruch 1, wobei das Wiedergabegerät gemäß dem Pull-Mode sowohl einen ersten Dienst zum Verwalten der Transportzustandsinformation und zum Streamen des Inhalts als auch einen zweiten Dienst zum Verwalten der Wiedergabezustandsinformation und zum Wiedergeben des Inhalts ausführt.

3. Verfahren nach Anspruch 2, wobei der erste Dienst ein Audio/Video (AV)-Transportdienst ist, und der zweite Dienst ein Wiedergabesteuerungsdienst ist.

4. Verfahren nach Anspruch 1, wobei die gespeicherte Transportzustandsinformation und die Wiedergabezustandsinformation als Steuerinformation für ein späteres Playback des Inhalts von einer Position, die einem Zeitpunkt entspricht, zu dem die Aufforderung zum Bookmarken erfolgt, verwendet werden.

5. Verfahren nach Anspruch 1, wobei die Wiedergabezustandsinformation eine Volumengröße enthält, und die Transportinformation Bookmark-Positionsinformation des gebookmarkten Inhalts enthält.

6. System zum Liefern von auf die Wiedergabe von Inhalten bezogener Information, wobei das System in einem Pull-Mode konfiguriert ist, mit:
einem Server (MS), der zum Speichern von Inhalt und zum Streamen des Inhalts konfiguriert ist;
einem Gerät (MR1, MR2), das zum Empfangen des gestreamten Inhalts und zum Wiedergeben des Inhalts konfiguriert ist; und
einem Steuerungspunkt (CP1, CP2) zum Steuern des Servers und des Geräts,
wobei das System **dadurch gekennzeichnet ist, dass** der Steuerungspunkt ferner konfiguriert ist zum:
Empfangen einer Aufforderung zum Bookmarken des gestreamten Inhalts,
Erhalten von Zustandsinformation, die eine Transportzustandsinformation und eine Wiedergabezustandsinformation bezüglich eines Playbacks des Inhalts zu einem Zeitpunkt der Aufforderung zum Bookmarken enthält, wobei die Transportzustandsinformation mit einem Streaming-Status des Inhalts verbunden ist und die Wiedergabezustandsinformation mit einem Wiedergabestatus des Inhalts verbunden ist, und wobei gemäß dem Pull-Mode sowohl die Transportzustandsinformation als auch die Wiedergabezustandsinformation von dem Wiedergabegerät erhalten werden; und
Veranlassen einer Aktion an den Server, um die Transportzustandsinformation und die Wiedergabezustandsinformation im Server zu speichern, wobei die Transportzustands-information und die Wiedergabezustandsinformation in der Aktion als Eingabe-Argument enthalten sind.

7. System nach Anspruch 6, wobei der Server zum Speichern der Transportzustandsinformation und der Wiedergabezustandsinformation entsprechend der Aktion konfiguriert ist.

8. System nach Anspruch 6, wobei das Gerät konfiguriert ist, um gemäß dem Pull-Mode sowohl einen ersten Dienst zum Verwalten der Transportzustandsinformation und zum Streamen des Inhalts als auch einen zweiten Dienst zum Verwalten der Wiedergabezustandsinformation und zum Wiedergeben des Inhalts auszuführen.

9. System nach Anspruch 8, wobei der erste Dienst ein Audio/Video (AV)-Transportdienst ist, und der zweite Dienst ein Wiedergabesteuerungsdienst ist.

10. System nach Anspruch 9, wobei die gespeicherte Transportzustandsinformation und die Wiedergabezustandsinformation als Steuerinformation für ein späteres Playback des Inhalts von einer Position, die einem Zeitpunkt entspricht, zu dem die Aufforderung zum Bookmarken erfolgt, verwendet werden.

11. System nach Anspruch 9, wobei die Wiedergabezustandsinformation eine Volumengröße enthält und die Transportinformation Bookmark-Positionsinformation des gebookmarkten Inhalts enthält.

## Revendications

1. Procédé de délivrance d'une information se rapportant à une reproduction de contenu entre un dispositif de reproduction (MR1, MR2) et un serveur (MS), le dispositif de reproduction et le serveur étant inclus dans un système de reproduction de contenus de média configuré dans un mode d'extraction, le procédé comprenant :
la transmission en continu d'un contenu du serveur jusqu'au dispositif de reproduction ; et
la reproduction du contenu transmis en continu au niveau du dispositif de reproduction ;
dans lequel le procédé est **caractérisé en ce que** le procédé comprend :
la réception d'une demande de mise en signet du contenu étant reproduit au niveau du dispositif de reproduction ;
l'obtention d'une information d'état incluant une information d'état de transport et une information d'état de rendu se rapportant à une reproduction du contenu au moment de la demande de mise en signet, dans lequel l'information d'état de transport est associée avec un statut de transmission en continu du contenu, et l'information d'état de rendu est associée avec un statut de rendu du contenu,
dans lequel, conformément au mode d'extraction, l'information d'état de transport et l'information d'état de rendu sont toutes les deux obtenues du dispositif de reproduction ; et
l'appel d'une action du serveur pour stocker l'information d'état de transport et l'information d'état de rendu dans le serveur, dans lequel l'information d'état de transport et l'information d'état de rendu sont incluses dans l'action comme un argument d'entrée.

2. Procédé selon la revendication 1, dans lequel le dispositif de reproduction exécute, conformément au mode d'extraction, à la fois un premier service de gestion de l'information d'état de transport et de transmission en continu du contenu et un deuxième service de gestion de l'information d'état de rendu et de rendu du contenu.

3. Procédé selon la revendication 2, dans lequel le premier service est un service de transport audio/vidéo (AV), et le deuxième service est un service de contrôle de rendu.

4. Procédé selon la revendication 1, dans lequel l'information d'état de transport et l'information d'état de rendu stockées sont utilisées comme information de contrôle pour une reproduction différée du contenu à partir d'une position correspondant à un moment auquel la demande de mise en signet est demandée.

5. Procédé selon la revendication 1, dans lequel l'information d'état de rendu inclut une valeur de volume, et l'information de transport inclut une information de position de signet du contenu mis en signet.

6. Système de délivrance d'une information se rapportant à une reproduction de contenu, le système étant configuré dans un mode d'extraction, comprenant :
un serveur (MS) configuré pour stocker un contenu et transmettre en continu le contenu ;
un dispositif (MR1, MR2) configuré pour recevoir le contenu transmis en continu et rendre le contenu ; et
un point de contrôle (CP1, CP2) pour contrôler le serveur et le dispositif, dans lequel le système est **caractérisé en ce que** le point de contrôle est en outre configuré pour :
recevoir une demande de mise en signet du contenu transmis en continu ;
obtenir une information d'état incluant une information d'état de transport et une information d'état de rendu se rapportant à une reproduction du contenu au moment de la demande de mise en signet, dans lequel l'information d'état de transport est associée avec un statut de transmission en continu du contenu, et l'information d'état de rendu est associée avec un statut de rendu du contenu, et dans lequel, conformément au mode d'extraction, l'information d'état de transport et l'information d'état de rendu sont toutes les deux obtenues du dispositif ; et
appeler une action du serveur pour stocker l'information d'état de transport et l'information d'état de rendu dans le serveur, dans lequel l'information d'état de transport et l'information d'état de rendu sont incluses dans l'action comme un argument d'entrée.

7. Système selon la revendication 6, dans lequel le serveur est configuré pour stocker l'information d'état de transport et l'information d'état de rendu conformément à l'action.

8. Système selon la revendication 6, dans lequel le dispositif est configuré pour exécuter, conformément au mode d'extraction, à la fois un premier service de gestion de l'information d'état de transport et de transmission en continu du contenu et un deuxième service de gestion de l'information d'état de rendu et de rendu du contenu.

9. Système selon la revendication 8, dans lequel le premier service est un service de transport audio/vidéo (AV), et le deuxième service est un service de contrôle de rendu.

10. Système selon la revendication 9, dans lequel l'information d'état de transport et l'information d'état de rendu stockées sont utilisées comme information de contrôle pour une reproduction différée du contenu à partir d'une position correspondant à un moment auquel la demande de mise en signet est demandée.

11. Système selon la revendication 9, dans lequel l'information d'état de rendu inclut une valeur de volume, et l'information de transport inclut une information de position de signet du contenu mis en signet.
